Europäisches Patentamt

European Patent Office

Office européen des brevets

(19)

(11) Veröffentlichungsnummer : **0 472 014 B1**

(12) # EUROPÄISCHE PATENTSCHRIFT

(45) Veröffentlichungstag der Patentschrift :
**23.03.94 Patentblatt 94/12**

(51) Int. Cl.$^5$ : **B01D 53/36, B01J 23/22, B01J 23/28, B01J 37/02**

(21) Anmeldenummer : **91112772.8**

(22) Anmeldetag : **30.07.91**

(54) **Verfahren zur Herstellung von Katalysatoren.**

(30) Priorität : **11.08.90 DE 4025587**

(43) Veröffentlichungstag der Anmeldung :
**26.02.92 Patentblatt 92/09**

(45) Bekanntmachung des Hinweises auf die
Patenterteilung :
**23.03.94 Patentblatt 94/12**

(84) Benannte Vertragsstaaten :
**DE FR GB IT NL SE**

(56) Entgegenhaltungen :
**EP-A- 0 017 865
EP-A- 0 348 768
DE-A- 3 701 984
US-A- 4 176 091
PATENT ABSTRACTS OF JAPAN vol. 8, no.
122 (C-227)(1559) 8. Juni 1984 & JP-A-59 035
028 (MITSUBISHI JUKOGYO K.K.) 10. August
1982**

(73) Patentinhaber : **BASF Aktiengesellschaft
Carl-Bosch-Strasse 38
D-67063 Ludwigshafen (DE)**

(72) Erfinder : **Drews, Ronald, Dr.
Pranckhstrasse 22
W-6700 Ludwigshafen (DE)**
Erfinder : **Scheidsteger, Olaf, Dr.
Rheindammstrasse 30
W-6800 Mannheim 1 (DE)**
Erfinder : **Buechele, Wolfgang, Dr.
An der Froschlache 7
W-6700 Ludwigshafen (DE)**
Erfinder : **Hess, Klaus, Dr.
Sonnenwendstrasse 40
W-6702 Bad Duerkheim (DE)**
Erfinder : **Schachner, Helmut, Dr.
Zum Gruenshof 6
W-6909 Walldorf (DE)**

## Beschreibung

Vorliegende Erfindung betrifft ein Verfahren zur Herstellung von Katalysatoren.

Für die Entfernung von $NO_x$ aus Abgasen ist bisher eine Reihe von Verfahren bekannt geworden. Bekannt sind z.B. Verfahren, bei denen $NO_x$ mit einem Brennstoff, z.B. Erdgas oder Methan, in Gegenwart von Edelmetallen als Katalysatoren nichtselektiv zu Stickstoff reduziert wird. Diese Verfahren haben aber technisch keine Bedeutung erlangt, da neben den Stickoxiden auch der in den Abgasen vorhandene Sauerstoff umgesetzt wird, was neben dem Nachteil einer unerwünscht hohen Steigerung der Temperatur den weiteren Nachteil eines hohen Verbrauchs an Brennstoff hat, abgesehen davon, daß die Edelmetallkatalysatoren nicht vergiftungsfest sind.

Aus diesem Grunde ist auch ein selektiv arbeitendes katalytisches Verfahren entwickelt worden, bei dem die Stickoxide in Gegenwart von Nichtedelmetallkatalysatoren mit Ammoniak selektiv zu Stickstoff reduziert werden. Dieses unter dem Namen SCR-Verfahren (Selective Catalytic Reduction) bekannt gewordene Verfahren hat zunehmend an technischer Bedeutung gewonnen.

Bei diesem Verfahren wird praktisch der in den Abgasen enthaltene Sauerstoff nicht angegriffen und der Verbrauch an Ammoniak richtet sich allein nach dem Stickoxid-Gehalt der zu behandelnden Abgase.

Für dieses Verfahren werden verschiedene Katalysatoren eingesetzt.

In der US-A- 3 279 884 werden Katalysatoren beschrieben, die katalytisch wirksame Mengen an Vanadin-, Molybdän- und/oder Wolframoxiden enthalten. In der DE-C- 1 253 685 werden darüber hinaus Katalysatoren beschrieben, die auch Manganoxid und/oder Eisenoxid enthalten können.

In der DE-C- 2 458 888 werden für den gleichen Zweck Katalysatoren genannt, die

1. Titan in Form von Oxiden und
2. wenigstens ein Element aus der Gruppe
    a) Eisen und Vanadin in Form von Oxiden und/oder Sulfaten und/oder
    b) Molybdän, Wolfram, Nickel, Cobalt, Kupfer, Chrom und Uran in Form von Oxiden sowie gegebenenfalls
3. Zinn in Form von Oxiden, sowie
4. Metalle aus der Gruppe Silber, Beryllium, Magnesium, Zink, Bor, Aluminium, Yttrium, Seltene Erdmetalle, Silicium, Niob, Antimon, Wismut und Mangan in Form von Oxiden

enthalten.

Die oben beschriebenen Katalysatoren können als Vollkatalysatoren oder auch auf übliche Träger aufgebracht eingesetzt werden.

In der DE-A- 3 438 367 werden Katalysatoren beschrieben, die

1. aus einer binären Oxidverbindung des Titans und Siliciums und/oder des Titans und Zirkoniums und/oder einer ternären Oxidverbindung des Titans, Zirkoniums und Siliciums sowie
2. 0 - 5 Gew.-% eines Vanadinoxids und
3. 1 bis 15 Gew.-% mindestens eines Oxides der Elemente Wolfram, Molybdän, Zinn und Cer

bestehen.

In der DE-B- 24 14 333 werden ferner Katalysatoren für SCR-Verfahren beschrieben, die aus einem Vanadinkatalysator der allgemeinen Formel $V_x A_y O_z$ bestehen. In dieser Formel steht A für die Elemente Kupfer, Zink, Zinn, Blei, Titan, Phosphor, Chrom, Eisen, Kobalt und Nickel, y und x bedeuten eine Zahl mit einem Wert von 0,5 bis 12 und der Wert für z richtet sich nach $V_x$ und $A_y$.

Von den aus dem oben zitierten Stand der Technik zu entnehmenden Katalysatorkomponenten haben sich bezüglich der Aktivität für die $NO_x$-Reduktion insbesondere Katalysatoren bewährt, die die Elemente Vanadin, Wolfram und/oder Molybdän in Form von Oxiden oder Sulfaten als katalytisch aktive Komponenten und Titandioxid als Träger enthalten. Besonderes Augenmerk wurde dabei auf die Entwicklung von Katalysatoren gelegt, die eine möglichst hohe Reduktion des $NO_x$ gewährleisten, andererseits aber möglichst inert gegenüber der Oxidation von $SO_2$ zu $SO_3$, sind. $SO_2$ kommt stets in den Verbrennungsgasen von schwefelhaltigen Ölen oder Kohlen vor. Aus der oben zitierten DE-A- 34 38 367 ist es bekannt, daß ein Gehalt an Vanadinoxid im Katalysator einerseits für die hohe Aktivität bezüglich der $NO_x$-Reduktion verantwortlich ist, andererseits aber auch eine unerwünschte Oxidation des $SO_2$ zu $SO_3$ begünstigt, was wiederum zu Störungen durch die Bildung von Ammoniumsulfat führt, das sich in den der katalytischen Reaktionszone nachfolgenden Apparateteilen und Rohrleitungen niederschlägt.

Das Dokument PATENT ABSTRACTS OF JAPAN, vol. 8, no 122 (C-227) (159) lehrt, daß Katalysatoren die aus Ti-Solen hergestellt sind und W- sowie Mo-Oxide enthalten eine geringe Aktivität für die Oxidation von $SO_2$ zu $SO_3$ besitzen.

Der vorliegenden Erfindung lag daher die Aufgabe zugrunde, ein Verfahren zur Herstellung von Katalysatorformkörpern zur Entfernung von Stickoxiden aus Verbrennungsabgasen durch selektive katalytische Reduktion mit Ammoniak bereitzustellen, die als katalytisch aktive Komponenten zumindest die Verbindungen des Vanadins, Molybdäns und/oder Wolframs enthalten, die durch Tränken auf einem Träger aufgebracht worden sind, die eine hohe Aktivität und Selektivität bezüglich der $NO_x$-Abreinigung aufweisen und die eine geringe Aktivität für die Oxidation von $SO_2$ zu $SO_3$ besitzen.

Es wurde gefunden, daß diese Aufgabe dadurch gelöst werden kann, daß zumindest eine der aktiven Komponenten in Form eines Sols auf den vorher verformten Träger aufgebracht wird.

Bei der Herstellung des Katalysators geht man so vor, daß man auf dem vorgeformten Träger, der also bereits die endgültige Form des herzustellenden Katalysators aufweist, zumindest eine der aktiven Komponenten in Form eines Sols durch Tränken aufbringt. Der Träger kann z.B. die Form von Waben, Platten, Pellets oder Strängen haben. Als Materialien für den Träger kommen beispielsweise Kieselsäure, Diatomeenerde, Porzellanmaterialien, Zeolithe, Aluminiumoxide, vorzugsweise in der $\alpha$ oder $\gamma$-Form und insbesondere Titandioxid, bevorzugt in der Anatasform, in Betracht. Enthält der herzustellende Katalysatorformkörper mehr als eine katalytisch aktive Komponente, so ist es nicht erforderlich, sämtliche aktive Komponenten mittels der erfindungsgemäßen Soltränkung einzubringen, sondern es genügt, zumindest eine der drei genannten Komponenten nach dem erfindungsgemäßen Verfahren einzubringen. So kann beispielsweise das Trägermaterial vor der Verformung bereits die anderen Komponenten, beispielsweise in Form ihrer Oxide enthalten oder es kann der bereits verformte Träger in üblicher Weise mit Lösungen von Verbindungen der anderen katalytisch aktiven Metalle getränkt worden sein. Anschließend wird er calciniert und dann die restliche(n) Komponente(n) durch Soltränkung eingebracht. Bevorzugt werden die Verbindungen des Vanadins für die erfindungsgemäße Soltränkung eingesetzt.

Die Herstellung der für die Tränkung eingesetzten Sole des Vanadins, Wolframs und/oder Molybdäns erfolgt nach bekannten Methoden. Als Vanadin-Sole werden insbesondere $V_2O_5$-Sole eingesetzt wie sie z.B. beim Behandeln von Ammoniumvanadaten oder Alkalivanadaten mit Säuren entstehen (vgl. Gmelins Handbuch der Anorganischen Chemie, 8. Auflage Vanadium, Teil B, Lieferung 1, System Nr. 48, Seiten 98 bis 101).

Im Falle des Molybdäns werden insbesondere Molybdänsäuresole eingesetzt, die in analoger Weise wie die $V_2O_5$-Sole durch Säurebehandlung von Alkalimetall-Molybdaten und Dialyse der entstehenden sauren Lösung hergestellt werden (vgl. Gmelins Handbuch der Anorganischen Chemie, 8. Auflage, 1935 Molybdän, System Nr. 53, Seiten 111-112). Als wolframhaltige Sole kommen insbesondere Sole der Wolframsäure in Betracht, die ebenfalls durch Behandeln von Alkaliwolframaten mit Mineralsäuren hergestellt werden können (vgl. Gmelins Handbuch der Anorganischen Chemie, 8. Auflage, 1933, Wolfram, System Nr. 54, Seite 128).

Nach der Tränkung des Trägerkörpers mit dem Sol wird dieser bei Temperaturen von 80 bis 130°C getrocknet und anschließend bei Temperaturen von 400 bis 600°C calciniert.

Die Katalysatoren können Vanadin, berechnet als $V_2O_5$ in Mengen von 0,05 bis 5 Gew.-%, vorzugsweise 0,1 bis 1,0 Gew.-% enthalten. Das Wolfram bzw. Molybdän kann im Katalysator in Mengen von 0 bis 10 Gew.-%, berechnet jeweils als Trioxid, vorliegen.

Selbstverständlich können sie auch weitere aktive Komponenten enthalten, die für diese SCR Katalysatoren bekannt sind wie z.B. Verbindungen des Zinns, Nickels, Kobalts, Kupfers, Chroms, Urans, Cers und dgl., vorzugsweise in Form ihrer Oxide.

Die Katalysatoren werden für das Verfahren zur selektiven katalytischen Reduktion von in Abgasen enthaltenem $NO_x$ mittels Ammoniak eingesetzt.

Das Verfahren wird bei Temperaturen von 100 bis 600°C, vorzugsweise von 300 bis 450°C bei Raumgeschwindigkeiten von 1 000 bis 150 000 $h^{-1}$, insbesondere 2 000 bis 100 000 $h^{-1}$ durchgeführt. Das Ammoniak wird im molaren Verhältnis von $NH_3$:NO von 0,5 bis 1,4, vorzugsweise 0,7 bis 1,1, besonders bevorzugt bei einem molaren Verhältnis < durchgeführt, um einen $NH_3$-Schlupf zu vermeiden.

Durch die folgenden Beispiele wird das erfindungsgemäße Verfahren näher erläutert:

Beispiele

500 g $TiO(OH)_2$ werden mit 12,5 kg konzentrierter $H_2SO_4$ innig vermischt, 2 h bei 200°C erhitzt und anschließend in 20 l $H_2O$ aufgelöst. Der Rückstand wird abfiltriert und das Filtrat mit 25 gew.-%iger $NH_3$-Lösung versetzt bis die Fällung der Metatitansäure beendet ist. Man filtriert ab und wäscht gründlich mit destilliertem Wasser. Zu dem feuchten Produkt gibt man 450 g Ammonium-p-Wolframat, gelöst in 6 l $H_2O$, heizt auf 90°C auf und rührt 1 h lang. Danach wird eingedampft.

Zu 4 kg des eingedampften Produktes gibt man 0,8 l $H_2O$ und mischt gründlich durch. Nach Zugabe von Bentonit als Verstrangungshilfsmittel wird die Masse mittels eines Extruders zu Wabenkörpern ausgeformt. Diese enthalten 6 x 6 Zellen (Öffnung 6 mm, Stegbreite 1,2 mm) und sind 300 mm lang.

Aus diesen Wabenkörpern werden Testkörper herausgesägt, die aus 3 x 3 Zellen bei 300 mm Länge bestehen.

Diese Testkörper werden mit einem $V_2O_5$-Sol getränkt, das wie folgt hergestellt worden ist:

1 Gewichtsteil Ammoniumvanadat wird in einer Reibschale mit etwas Wasser verrieben. Unter weiterem Reiben werden 10 Volumenteile verdünnte Salzsäure (2N) zugesetzt. Der entstandene rote Niederschlag von $V_2O_5$ wird auf ein Filter gegeben und mit Wasser gewaschen, bis das anfänglich gelbe Filtrat rötlich-trüb abzulaufen beginnt. Der Rückstand wird in einen Erlenmeyer-Kolben gegeben und mit Wasser auf 100 Volumenteile aufgefüllt. Ein zunächst noch vorhandener Niederschlag verteilt sich allmählich in der Flüssigkeit. Nach einigen Stunden erhält man ein klares rotes Sol.

(Gewichtsteile verhalten sich zu Volumenteilen wie g : ml).

Nach dem Tränken werden die Testkörper 1 h lang bei 120°C getrocknet und dann 6 h lang bei 500°C calciniert.

Die Vanadingehalte der Katalysatoren sind in der folgenden Tabelle aufgeführt. Die Katalysatoren enthalten jeweils 5 Gew.-% $WO_3$. Sie haben eine geometrische Oberfläche von jeweils 427 $m^2/m^3$.

Zum Vergleich werden Testkörper mit einer Ammoniumvanadat-Lösung getränkt, anschließend 1 h bei 120°C getrocknet und dann 6 h bei 500°C calciniert. Die Vanadingehalte dieser Katalysatoren sind ebenfalls in der folgenden Tabelle aufgeführt.

Zum $NO_x$-Aktivitätstest wurden die Katalysatoren mit einem synthetisch hergestellten Rauchgas mit 200 Vol.-ppm NO, 240 Vol.-ppm $NH_3$, 500 Vol.-ppm $SO_2$, 2 Vol.-% $O_2$, 10 Vol.-% $H_2O$, Rest Stickstoff bei 380°C und einer Raumgeschwindigkeit von 21 300 $h^{-1}$ beaufschlagt.

Zur Ermittlung der $SO_2$-Oxidation wurden die Katalysatoren mit einem synthetisch hergestellten Rauchgas mit 500 Vol.-ppm $SO_2$, 4 Vol.-% $O_2$, 10 Vol.-% $H_2O$, Rest Stickstoff bei 380°C und einer Raumgeschwindigkeit von 5500 $h^{-1}$ beaufschlagt.

| Katalysator | $V_2O_5$ [Gew.-%] | Tränkung | Umsatz in % | NO-Aktivität K [m/h] | $SO_2$-Oxidationsrate [%] |
|---|---|---|---|---|---|
| Vergleichsbeispiel 1 | 0 | - | 34,4 | 21,0 | 0,21 |
| Vergleichsbeispiel 2 | 0,12 | Lösung | 41,7 | 27,0 | 0,30 |
| Vergleichsbeispiel 3 | 0,30 | Lösung | 47,8 | 32,5 | 0,61 |
| Beispiel 1 | 0,11 | Sol | 50,7 | 35,3 | 0,23 |
| Beispiel 2 | 0,13 | Sol | 54,9 | 39,7 | 0,29 |
| Beispiel 3 | 0,29 | Sol | 60,3 | 46,0 | 0,55 |

In der obigen Tabelle bedeutet K die Aktivität des Katalysators in [m/h] in bezug auf die $NO_x$-Reduktion, die sich aus folgender Formel ergibt:

$$K = - AV \times \ln (1 - \text{Umsatz})$$

wobei AV sich aus der Raumgeschwindigkeit $[h^{-1}]$ : geometrische Oberfläche $[m^2/m^3]$ des Katalysators errechnet.

Aus der Tabelle ist zu ersehen, daß Katalysatoren, bei denen die katalytisch aktive Komponente ($V_2O_5$) durch Soltränkung aufgebracht worden ist, eine deutlich höhere Aktivität für die katalytische Reduktion des $NO_x$ besitzen, als Katalysatoren bei denen die gleiche Menge an $V_2O_5$ auf übliche Weise durch Tränkung mit einer Lösung auf den Träger aufgebracht worden ist (vgl. Beispiel 1 mit Vergleichsbeispiel 2 bzw. Beispiel 3 mit Vergleichsbeispiel 3). Gleichzeitig ist die $SO_2$-Oxidationsrate bei den erfindungsgemäßen Beispielen 1 und 3 gegenüber den Vergleichsbeispielen 2 und 3 deutlich erniedrigt. Ein Vergleich des erfindungsgemäßen Beispiels 1 mit dem Vergleichsbeispiel 3 zeigt besonders deutlich, daß bei einer um etwa 10 % höheren Aktivität für die $NO_x$-Reduktion, die $SO_2$-Oxidationsrate um etwa 2/3 herabgesetzt ist.

**Patentansprüche**

1.  Verfahren zur Herstellung von Katalysatorformkörpern für die selektive Reduktion von in Abgasen enthaltenen Stickoxiden mit Ammoniak, die als katalytisch aktive Komponenten Verbindungen des Vanadins, Molybdäns und/oder Wolframs enthalten, die durch Tränken auf einen Träger aufgebracht worden sind, dadurch gekennzeichnet, daß zumindest eine der aktiven Komponenten in Form eines Sols auf den vorher verformten Träger aufgebracht wird.

2.  Verfahren nach Anspruch 1, dadurch gekennzeichnet, daß man wäßrige Sole der Oxide des Vanadins, Wolframs und/oder Molybdäns einsetzt.

3.  Verfahren nach den Ansprüchen 1 bis 2, dadurch gekennzeichnet, daß man ein wäßriges, $V_2O_5$-haltiges Sol einsetzt.

4.  Verfahren nach den Ansprüchen 1 bis 3, dadurch gekennzeichnet, daß man als Träger Titandioxid und-/oder Aluminiumoxid verwendet.

5.  Verfahren zur Entfernung von Stickoxiden aus Abgasen durch katalytische Reduktion mit Ammoniak unter Verwendung der nach den Ansprüchen 1 bis 4 hergestellten Katalysatoren.

**Claims**

1.  A process for the preparation of a catalyst molding for the selective reduction of nitrogen oxides present in exhaust gases using ammonia, the catalytically active components being compounds of vanadium, molybdenum and/or tungsten applied to a carrier by impregnation, wherein at least one of the active components is applied in the form of a sol to the pre-shaped carrier.

2.  A process as claimed in claim 1, wherein an aqueous sol of an oxide of vanadium, tungsten and/or molybdenum is employed.

3.  A process as claimed in claim 1 or 2, wherein an aqueous, $V_2O_5$-containing sol is employed.

4.  A process as claimed in any of claims 1 to 3, wherein the carrier used is titanium dioxide and/or aluminum oxide.

5.  A process for removing nitrogen oxides from exhaust gases by catalytic reduction with ammonia using a catalyst prepared as claimed in any of claims 1 to 4.

**Revendications**

1.  Procédé de préparation de corps moulés de catalyseur pour la réduction sélective des oxydes d'azote contenus dans des gaz résiduaires avec de l'ammoniac, qui contiennent comme constituant à activité catalytique des composés du vanadium, du molybdène et/ou du tungstène, qui ont été introduits par imprégnation sur un support, caractérisé en ce qu'au moins l'un des constituants actifs a été introduit sur le support préalablement formé sous forme d'un sol.

2.  Procédé selon la revendication 1, caractérisé en ce que l'on introduit des sols aqueux des oxydes du vanadium, du tungstène et/ou du molybdène.

3.  Procédé selon la revendication 1 ou 2, caractérisé en ce que l'on introduit un sol aqueux contenant $V_2O_5$.

4.  Procédé selon l'une des revendications 1 à 3, caractérisé en ce que l'on utilise comme support du dioxyde de titane et/ou de l'oxyde d'aluminium.

5.  Procédé pour éliminer les oxydes d'azote de gaz résiduaires par réduction catalytique avec de l'ammoniac en utilisant des catalyseurs préparés selon l'une quelconque des revendications 1 à 4.